# EUROPEAN PATENT APPLICATION

(11) **EP 4 484 478 A1**
(43) Date of publication of application: **01.01.2025**
(21) Application number: 22928809.7
(22) Date of filing: 30.06.2022
(51) Int. Cl.: C08J 11/04, C08J 11/10

(54) **AIR BAG TREATMENT SYSTEM AND AIR BAG TREATMENT METHOD**

(30) Priority: 28.02.2022 JP 2022030370
(71) Applicant: Refinverse, Inc., Tokyo 100-0006 (JP)
(72) Inventor: MATSUMURA Junya, Tokyo 100-0006 (JP); TAMAKI Goro, Tokyo 100-0006 (JP)
(74) Representative: Betten & Resch
(86) International application number: PCT/JP2022/026298
(87) International publication number: WO 2023/162287

(57) **Abstract**

An airbag treatment system for treating an airbag containing a plastic fiber coated with a silicone material in order to more efficiently separate the silicone material from the plastic fiber includes a remover that removes at least a part of the silicone material from the plastic fiber by treating at least a part of the airbag by using a hydroxide of alkali or an alkali earth metal and a surfactant, and a separator that separates the plastic fiber from the silicone material and extracts the plastic fiber.

## Description

### TECHNICAL FIELD

The present invention relates to an airbag treatment system and an airbag treatment method.

### BACKGROUND ART

In the abovementioned technical field, patent literature 1 discloses a technique that separates a silicone material from plastic by using a phase transfer catalyst.

### CITATION LIST

### PATENT LITERATURE

Patent literature 1: WO2007/135140

### SUMMARY OF THE INVENTION

### TECHNICAL PROBLEM

Unfortunately, the technique described in the abovementioned literature cannot increase the treatment efficiency because the phase transfer catalyst is necessary.

The present invention enables to provide a technique of solving the above-described problem.

### SOLUTION TO PROBLEM

One example aspect of the present invention provides an airbag treatment system for treating an airbag containing a plastic fiber coated with a silicone material, comprising
a remover that removes at least a part of the silicone material from the plastic fiber by treating at least a part of the airbag by using a hydroxide of alkali or an alkali earth metal and a surfactant, and
a separator that separates the plastic fiber from the silicone material and extracts the plastic fiber.

Another example aspect of the present invention provides an airbag treatment method of treating an airbag containing a plastic fiber coated with a silicone material, comprising
a removal step of removing at least a part of the silicone material from the plastic fiber by treating at least a part of the airbag by using a hydroxide of alkali or an alkali earth metal and a surfactant, and
a separation step of separating the plastic fiber from the silicone material and extracting the plastic fiber.

### ADVANTAGEOUS EFFECTS OF INVENTION

According to the present invention, a silicon material can be separated from a plastic fiber more efficiently.

### BRIEF DESCRIPTION OF DRAWINGS

Fig. 1 is a block diagram showing the configuration of an airbag treatment system according to the first example embodiment of the present invention;
Fig. 2 is a block diagram showing the configuration of an airbag treatment system according to the second example embodiment of the present invention;
Fig. 3 is a flowchart showing the procedure of the treatment of the airbag treatment system according to the second example embodiment;
Fig. 4 is a view showing the results of experiments conducted by an airbag treatment method according to the second example embodiment;
Fig. 5 is a view showing the results of experiments conducted by the airbag treatment method according to the second example embodiment;
Fig. 6 is a view showing the results of experiments conducted by the airbag treatment method according to the second example embodiment; and

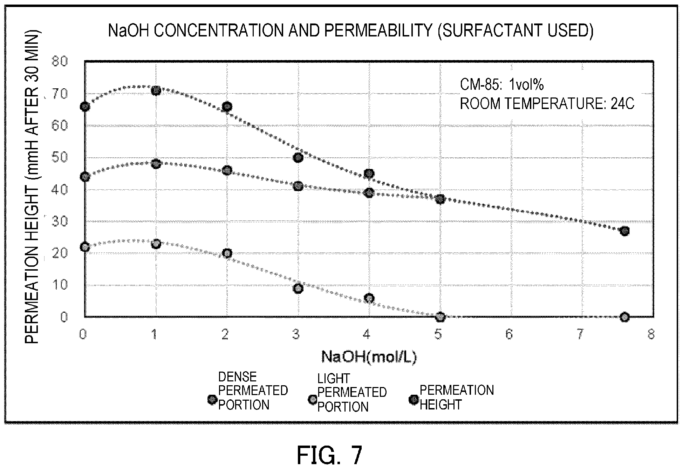

Fig. 7 is a view showing the results of experiments conducted by the airbag treatment method according to the second example embodiment.

### DESCRIPTION OF EXAMPLE EMBODIMENTS

Example embodiments of the present invention will now be described in detail with reference to the drawings. However, the constituent elements described in the following example embodiments are merely examples and do not limit the technical scope of the present invention to them.

### [First Example Embodiment]

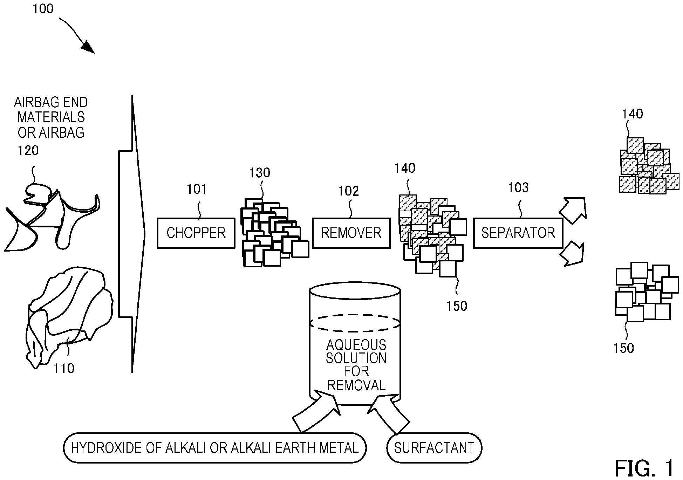

An airbag treatment system 100 as the first example embodiment of the present invention will be explained with reference to Fig. 1.

As shown in Fig. 1, the airbag treatment system 100 includes a chopper 101, a remover 102, and a separator 103.

The chopper 101 chops, into small pieces (e.g., 10 to 30 mm), a used airbag 110 containing plastic fibers (e.g., nylon cloth) coated with a silicone material or airbag end materials 120 wasted when airbags were manufactured.

The remover 102 removes silicone materials 140 from plastic fibers 150 by dipping chopped airbag pieces 130 in a specific aqueous solution.

The separator 103 separately extracts the plastic fibers 150 and the silicone materials 140. Note that the remover 102 and the separator 103 can also be integrated into one apparatus.

The aqueous solution for removal to be used by the remover 102 during removal is a solution mixture of a hydroxide of alkali or an alkali earth metal and a surfactant.

This example embodiment having the above configuration can separately extract silicone materials and plastic fibers by effectively treating an airbag.

### [Second Example Embodiment]

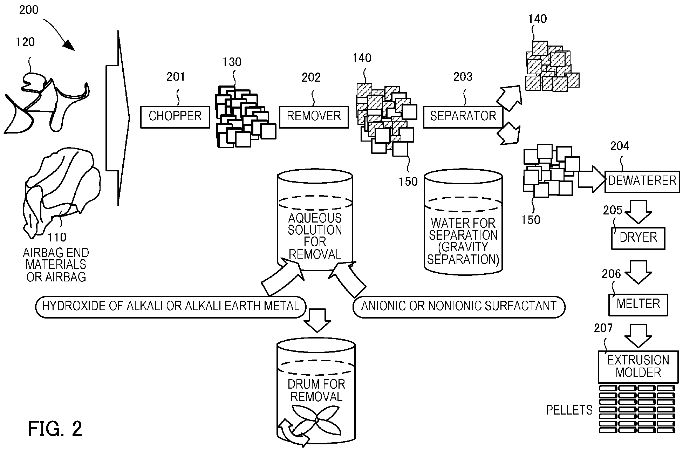

An airbag treatment system 200 as the second example embodiment of the present invention will be explained with reference to Fig. 2.

As shown in Fig. 2, the airbag treatment system 200 includes a chopper 201, a remover 202, a separator 203, a dewaterer 204, a dryer 205, a melter 206, and an extrusion molder 207.

The copper 201 chops, into small pieces (e.g., 10 to 30 mm), a used airbag 110 containing, e.g., nylon cloth as plastic fibers coated with a silicon material or airbag end materials 120 wasted when airbags were manufactured. The plastic fibers contain, e.g., polyamide, polyester, or polyolefin, or a combination thereof, as a base material. The plastic fibers can take various forms that can be coated with the silicone material. Examples of the forms are a thread, a fiber, a textile product, and a film.

The plastic fiber is preferably a thermoplastic material containing polyamide, polyester, or polyolefin, or a combination thereof, as a base material. Examples of polyamide are aliphatic or semi-aromatic polyamide, particularly, PA-6, PA-6,6, PA-4,6, PA-6,10, PA-6,12, PA-11, PA-12 and/or blends thereof, e.g., polyamide PA-6/6,6. Examples of polyester are a terephthalic acid monomer or its ester, e.g., polyethylene terephthalate (PET). Examples of polyolefin are polyethylene or polypropylene. Examples of the silicone material are silicone oil and a silicone resin.

The remover 202 removes silicone materials 140 from plastic fibers 150 by dipping chopped airbag pieces 130 into an aqueous solution for removal. The aqueous solution for removal to be used by the remover 102 during removal is a solution mixture of a hydroxide of alkali or an alkali earth metal and an anionic or nonionic surfactant. The hydroxide is selected from the group consisting of LiOH, NaOH, and KOH. A 1 to 60 wt%, preferably 5 to 50 wt%, and more preferably 10 to 40 wt% hydroxide of alkali or an alkali earth metal is used as the aqueous solution.

The anionic or nonionic surfactant is a surfactant selected from the group consisting of a solution mixture of sodium alkyl sulfonate and polyoxyethylene alkyl ether phosphate, polyoxyethylene lauryl ether, and polyoxyethylene alkyl ether.

The aqueous solution for removal is an aqueous solution prepared by mixing 0.1 to 10 wt% of the anionic or nonionic surfactant in the hydroxide having a concentration of 1% to 30%. A favorable example is an aqueous solution prepared by mixing 1 to 2 wt% of the anionic or nonionic surfactant in the hydroxide having a concentration of 3% to 5%. Airbag pieces (100 kg) are dipped in this aqueous solution for removal (e.g., 1,000 L) for 24 hrs. The mixing ratio and the dipping time are not limited to these.

Then, draining is performed, and a drum for removal containing water, the airbag pieces, and rubber balls is rotated for about 1.5 hrs. The rotation time is not limited to this.

Underwater agitation like this removes the silicone materials 140 from the plastic fibers 150. Then, the materials taken out from the drum for removal and water are put into the separator 203. In the separator 203, nylon pieces sink and the silicon materials float in the water. The floated silicone materials are scooped up, and the nylon pieces are collected and put into the dewaterer (centrifugal dewaterer) 204.

Subsequently, the dewatered nylon pieces are put into the dryer (hot air dryer) 205 and dried, heated to 280°C and melted in the melter 206, and finally molded into pellets in the extrusion molder 207. The heating temperature is not limited to 280°C. Also, the separation method is not limited to gravity separation.

A heating step of heating the aqueous solution in which the airbag is dipped to 60°C can also be included between the removal step in the remover 102 and the separation step in the separator 103. In this case, the airbag treatment system can include a heater.

### (Principle of Removal)

The principle by which the silicone material removes from the plastic fiber will be explained below. For this purpose, it is necessary to first consider the mechanism by which the silicone material bonds to the plastic fiber when an airbag is manufactured.

This is disclosed in detail in the following technical literature disclosed by ARAKAWA CHEMICAL INDUSTRIES. https://arakawachem.co.jp/jp/technology/document/200801.pdf.

According to this literature, examples of the silicone resin to be used in an airbag are a solventless type, an emulsion type, and a solvent diluted type. It is necessary to give importance not only to the performance and the cost, but also to the environment such as VOC because the inside of a car is an enclosed space. Therefore, the solventless type is often used. Solventless type silicone is generally obtained by mixing two types of liquid silicone, applying the mixture, and hardening the mixture with heat, thereby forming a film on base cloth. As the type of reaction, addition polymerization that has a high reactivity and forms no by-product is generally used. That is, an inorganic filler for increasing the strength (e.g., the tear strength or the tensile strength) of an airbag is an example of another additive that causes an Si-H group and a double bond to react with each other in the presence of a catalyst such as platinum. In addition, in order to improve the adhesion between the silicon cured film and nylon, it is also possible to use a silane coupling agent that couples with or interacts with the both.

SiO₂ or the like is used as the inorganic filler and reacts with the silane coupling agent. Nylon 66 has an amide bond (-CO-NH-), but hydrogen has low reactivity because nylon 66 is secondary amine, so a ring-opening reaction hardly occurs when X is an epoxy group. Therefore, an amine modified type is used to improve the adhesion of nylon to another material. On the silicone film surface, alkali acts as a catalyst, so main chain scission occurs. This reaction decreases the adhesion. A recombination reaction is the same as a polymerization reaction when manufacturing a silicone polymer by using an alkali catalyst.

Assuming that the silane coupling agent is coupled with the filler, i.e., SiO₂, the effect of the adhesion obtained by the coupling agent is lost because a silica gel dissolves in alkali.

Even when the adhesion between the coating layer and nylon is decreased by alkali treatment, natural removal hardly occurs. This is so probable because the uneven surface of the base cloth considerably enhances the anchor effect. When the molecular weight is low and the end is an -OH group, hydrophilicity is obtained, so permeation or adsorption to nylon may occur. When a solution for removal is repetitively used, the solution is accumulated, and the residual amount in nylon increases.

Accordingly, a surfactant for increasing the permeability to nylon is selected. The surfactant has affinity to a nylon fiber and hence is adsorbed to the fiber. Since the surfactant exists, alkali is adsorbed to the fiber and taken out, so the removing ability of the solution gradually decreases.

That is, the adhesion between the silicone film and the nylon cloth is weakened by dipping the materials in the aqueous solution for removal, the nylon cloth removes the silicone film by underwater agitation, and the silicone film and the nylon cloth are separated by gravity separation and respectively collected. This is so because if the silicone film dissolves or decomposes and mixes in the aqueous solution or the wastewater, the wastewater treatment becomes difficult to perform.

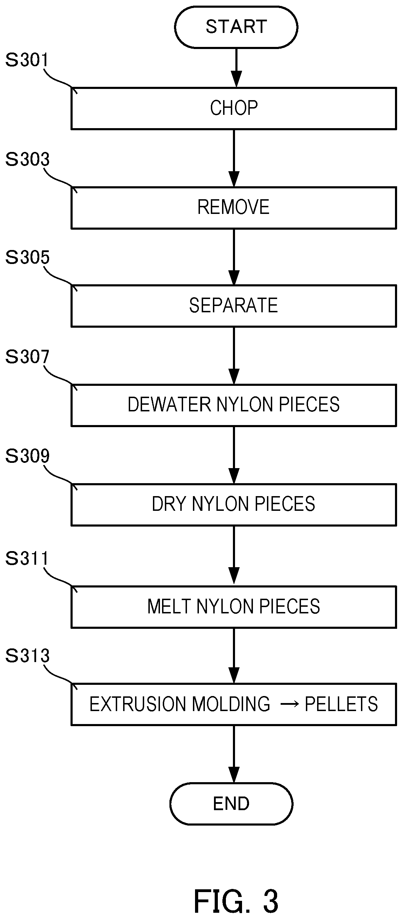

Fig. 3 is a flowchart for explaining the procedure of the treatment according to this example embodiment. First, in step S301, a waste airbag or airbag end materials are cut. Then, in step S303, silicone materials contained in the airbag pieces are removed from nylon fibers (nylon cloth).

Furthermore, in step S305, pieces of the nylon fibers are separated from the silicone materials and collected. Then, the nylon pieces are dewatered in step S307, dried in step S309, and melted in step S311. Finally, in step S313, pellets are formed by extrusion molding from the melted nylon pieces.

The above method can more effectively separate silicone materials from plastic fibers and perform recycling.

### Example 1

An anionic "solution mixture of sodium alkyl sulfonate and polyoxyethylene alkyl ether phosphate" (assume that this solution mixture is product A85) manufactured by company A was used as a surfactant. 1) 1% of the surfactant was added to 1 L of an aqueous 3% sodium hydroxide solution, and the aqueous solution was heated to 60°C. 2) Airbag pieces cut into 20-mm squares were put into the aqueous solution such that the liquor ratio was 10:1. 3) The aqueous solution was agitated at 110 rpm by using a paddle having a diameter of 100 mm while maintaining the state in which the aqueous solution was heated to 60°C. 4) Four test pieces were collected at random every 5 minutes from the solution being treated, and the removal strength was checked.

Considerably easy removal was possible after dipping for 30 min.

### Example 2

The same experiment as described above was conducted by using an anionic "solution mixture of sodium alkyl sulfonate and polyoxyethylene alkyl ether phosphate" (assume that this solution mixture is product A45) manufactured by company A as a surfactant. Consequently, easy removal was possible after dipping for 40 min although that was not as easy as in Example 1.

### Example 3

The same experiment as described above was conducted by using an anionic surfactant (assume that this surfactant is product BN) manufactured by company B as a surfactant. Consequently, somewhat easy removal was possible after dipping for 45 min although that was not as easy as in Example 2.

### Example 4

The same experiment as described above was conducted by using an anionic surfactant (assume that this surfactant is product B172) manufactured by company B as a surfactant. Consequently, somewhat easy removal was possible after dipping for 45 min although that was not as easy as in Example 2.

### Example 5

The same experiment as described above was conducted by using a nonionic surfactant (assume that this surfactant is product CP) manufactured by company C as a surfactant. Consequently, somewhat easy removal was possible after dipping for 45 min although that was not as easy as in Example 2.

### Example 6

The same experiment as described above was conducted by using a nonionic surfactant containing polyoxyethylene lauryl ether (assume that this surfactant is product DE103) manufactured by company D as a surfactant. Consequently, somewhat easy removal was possible after dipping for 45 min although that was not as easy as in Example 2.

### Example 7

The same experiment as described above was conducted by using a nonionic surfactant containing polyoxyethylene lauryl ether (assume that this surfactant is product DE105) manufactured by company D as a surfactant. Consequently, somewhat easy removal was possible after dipping for 45 min although that was not as easy as in Example 2.

### Example 8

The same experiment as described above was conducted by using a nonionic surfactant containing polyoxyethylene lauryl ether (assume that this surfactant is product DE108) manufactured by company D as a surfactant. Consequently, somewhat easy removal was possible after dipping for 45 min although that was not as easy as in Example 2.

### Example 9

The same experiment as described above was conducted by using a nonionic surfactant containing polyoxyethylene lauryl ether (assume that this surfactant is product DE109) manufactured by company D as a surfactant. Consequently, considerably easy removal (equivalent to Example 2) was possible after dipping for 45 min although that was not as easy as in Example 1.

### Example 10

The same experiment as described above was conducted by using a nonionic surfactant containing polyoxyethylene lauryl ether (assume that this surfactant is product DE404) manufactured by company D as a surfactant. Consequently, somewhat easy removal was possible after dipping for 45 min although that was not as easy as in Example 2.

### Example 11

The same experiment as described above was conducted by using a nonionic surfactant containing polyoxyethylene lauryl ether (assume that this surfactant is product DE408) manufactured by company D as a surfactant. Consequently, somewhat easy removal was possible after dipping for 45 min although that was not as easy as in Example 2.

### Example 12

The same experiment as described above was conducted by using a nonionic surfactant containing polyoxyethylene lauryl ether (assume that this surfactant is product DE409) manufactured by company D as a surfactant. Consequently, somewhat easy removal was possible after dipping for 45 min although that was not as easy as in Example 2.

### Example 13

The same experiment as described above was conducted by using a nonionic surfactant containing polyoxyethylene alkyl ether (assume that this surfactant is product EM9) manufactured by company E as a surfactant. Consequently, easy removal equivalent to Example 2 was possible after dipping for 45 min.

### (Comparative Example 1)

The same experiment as described above was conducted without using any surfactant. Consequently, no easy removal was possible even after dipping for 90 min.

### (Comparative Example 2)

The same experiment as described above was conducted by using a cationic surfactant containing a hexadecyl pyridinium chloride monohydrate. Consequently, no easy removal was possible even after dipping for 90 min.

### (Comparative Example 3)

The same experiment as described above was conducted by using an ampholytic surfactant containing a lauryl dimethyl aminoacetate solution. Consequently, no easy removal was possible even after dipping for 90 min.

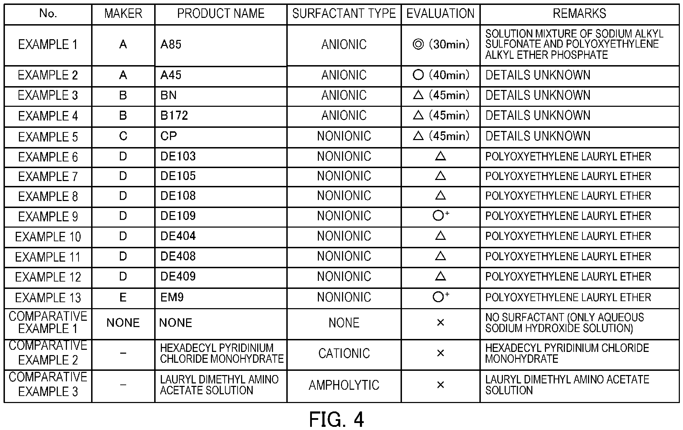

Fig. 4 is a view collectively showing the results of the examples and the comparative examples described above. It was possible to confirm the effect of the use of the anionic and nonionic surfactants.

### (1) Differences between removability evaluations caused by presence/absence of surfactant

Fig. 4 is a view showing the differences between removability evaluations caused by the presence/absence of a surfactant. When a surfactant was added, it was possible to confirm improvement of the removability by numerical value evaluation. It was also possible to confirm that the removability was almost constant when the dipping time was 30 min or more.

### (2) Relationship between NaOH concentration and removability

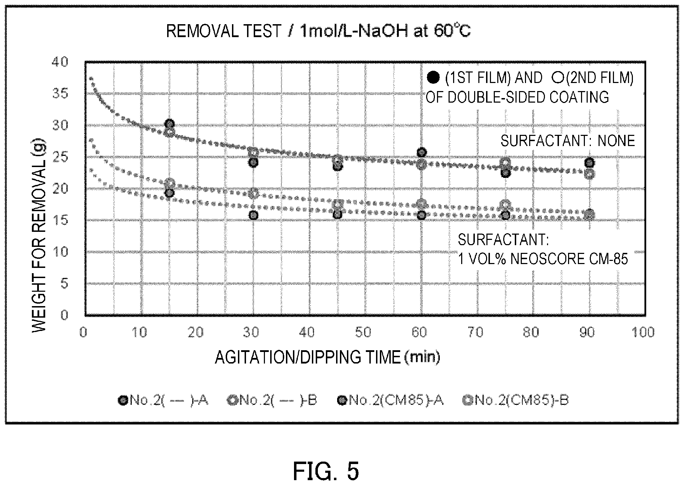

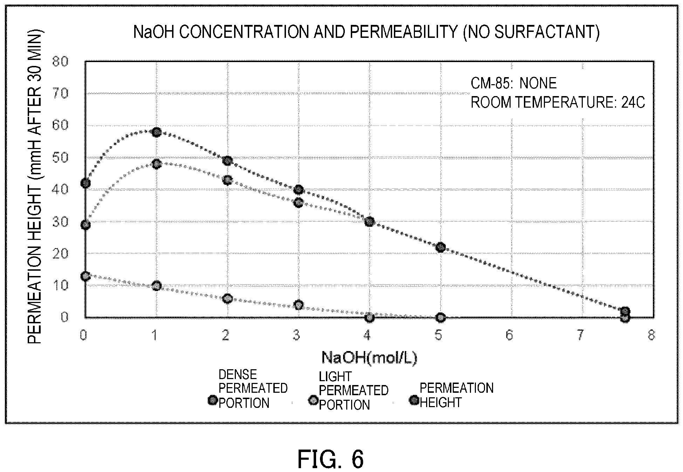

Figs. 5 and 6 are views obtained by checking the difference in permeability produced by the presence/absence of a surfactant by changing the NaOH concentration. The same surfactant as in Example 2 was used in Figs. 5 and 6. The dipping time was set at 60 min, and the treatment temperature was set at 90°C in order to further improve the removability. When the NaOH concentration was 4 wt% (about 1 mol/L) to 24 wt% (about 7.6 mol/L), the removability improved as the concentration rose. In a solution to which no surfactant was added, the permeability changed in accordance with the NaOH concentration, but no large difference was found in conformability to the silicone surface. On the other hand, in a system to which a surfactant was added, both the permeability and the conformability to the silicone surface improved. A solution to which no surfactant was added permeated into a nylon fiber but had low conformability to a silicone surface layer in contact with the fiber. A solution to which a surfactant was added improved the conformability as well.

### [Other Example Embodiments]

While the invention has been particularly shown and described with reference to example embodiments thereof, the invention is not limited to these example embodiments. It will be understood by those of ordinary skill in the art that various changes in form and details may be made therein without departing from the spirit and scope of the present invention as defined by the claims. A system or apparatus including any combination of the individual features included in the respective example embodiments may be incorporated in the scope of the present invention.

This application is based upon and claims the benefit of priority from Japanese patent application No. 2022-030370, filed on February 28, 2022, the disclosure of which is incorporated herein in its entirety by reference.

## Claims

1. An airbag treatment system for treating an airbag containing a plastic fiber coated with a silicone material, comprising:
a remover that removes at least a part of the silicone material from the plastic fiber by treating at least a part of the airbag by using an alkali metal hydroxide or an alkali earth metal hydroxide and a surfactant containing a solution mixture of sodium alkyl sulfonate and polyoxyethylene alkyl ether phosphate; and
a separator that separates the plastic fiber from the silicone material and extracts the plastic fiber.

2. An airbag treatment method of treating an airbag containing a plastic fiber coated with a silicone material, comprising:
a removal step of removing at least a part of the silicone material from the plastic fiber by treating at least a part of the airbag by using an alkali metal hydroxide or an alkali earth metal hydroxide and a surfactant containing a solution mixture of sodium alkyl sulfonate and polyoxyethylene alkyl ether phosphate; and
a separation step of separating the plastic fiber from the silicone material and extracting the plastic fiber.

3. The airbag treatment method according to claim 2, wherein the hydroxide is selected from the group consisting of LiOH, NaOH, and KOH.

4. The airbag treatment method according to claim 2 or 3, wherein in the removal step, at least a part of the air bag is dipped in an aqueous solution prepared by mixing 0.1 to 10 wt% of the surfactant in the hydroxide having a concentration of 1% to 30%.

5. The airbag treatment method according to any one of claims 2 to 4, further comprising a heating step of heating the hydroxide and the surfactant to 60°C, between the removal step and the separation step.

6. The airbag treatment method according to any one of claims 2 to 5, wherein the plastic fiber contains polyamide or polyester as a base material.

7. The airbag treatment method according to any one of claims 2 to 6, wherein
the removal step comprises a dipping step of dipping at least a part of the airbag in an aqueous solution prepared by mixing the surfactant in the hydroxide, and
the separation step removes the silicone material from the plastic fiber by underwater agitation, separates the silicone material and the plastic fiber by gravity separation, and respectively collects the silicone material and the plastic fiber.
